(19) **Europäisches Patentamt**

**European Patent Office**

**Office européen des brevets**

(11) **EP 1 564 408 B1**

(12) **EUROPEAN PATENT SPECIFICATION**

(45) Date of publication and mention
of the grant of the patent:
**02.11.2006 Bulletin 2006/44**

(51) Int Cl.:
*F04B 13/02* (2006.01)    *F04B 49/06* (2006.01)
*F04B 17/03* (2006.01)

(21) Application number: **04425093.4**

(22) Date of filing: **12.02.2004**

(54) **Fluid circulation pump for heating and conditioning systems and the like**

Fluidzirkulationspumpe für Heizungs- und Klimatisierungssysteme, oder dergleichen mehr

Pompe de circulation fluidique pour systèmes de chauffage et de climatisation, ou autres systèmes de ce genre

(84) Designated Contracting States:
**AT BE BG CH CY CZ DE DK EE ES FI FR GB GR HU IE IT LI LU MC NL PT RO SE SI SK TR**

(43) Date of publication of application:
**17.08.2005 Bulletin 2005/33**

(73) Proprietor: **Askoll Holding S.r.l.**
**36031 Povolaro di Dueville (Vicenza) (IT)**

(72) Inventor: **Marioni, Elio**
**36031 Dueville (Vicenza) (IT)**

(74) Representative: **Ferrari, Barbara**
**Botti & Ferrari S.r.l.,**
**Via Locatelli, 5**
**20124 Milano (IT)**

(56) References cited:
**US-A- 4 702 674**     **US-A1- 2002 192 085**
**US-A1- 2003 178 966**

**Description**

<u>Field of Application</u>

The present invention relates, in its more general aspect, to a fluid circulation pump, for example of the type to be installed on a heating and/or conditioning system.

The invention also relates to a method for measuring a parameter that is characteristic of the heating and/or conditioning system and the following description relates to this field of application in order to make the illustration easier.

<u>Prior Art</u>

As the skilled persons in the field well know, in fluid circulation pumps mounted in heating and/or conditioning systems, commonly also called circulators, electric motors of the asynchronous type with winding and phase choking are normally employed.

Their speed is regulated by control units, on the basis of instantaneous values taken by the variables measured throughout the system. In particular, sensors for measuring the flow rate, the temperature and the pressure of the circulating fluid are provided.

For example, asynchronous motors currently used in the manufacture of circulators require a suitable power electronic circuitry for driving and regulating the operative steps of the motor but also an signal electronic circuitry for detecting for example the motor rotations or the motor phase.

Although advantageous from several points of view, circulators wherein asynchronous electric motors are used have known drawbacks the main of which are here listed:

- the speed variation is not precise because of the winding and phase choking and it produces vibrations with subsequent noise of acoustic and electric type;
- the reliability level in the circulator operation is not particularly high, since it depends on the correct operation of the sensors arranged throughout the system.

Only in recent years circulators realised with the synchronous motor technology, with permanent-magnet rotor, have begun to be commercially successful.

The synchronous motors have advantages in terms of simplicity of structure and assembly as well as of moderate cost.

The use of synchronous motors implies the solution of some driving problems due to the fact that the excitation magnetic flux, which is constant because of the permanent magnets, requires relatively higher current absorption by the stator windings in order to suitably regulate the speed and the direction changes of the motor rotation.

Moreover, in order to limit the current on the single coil, so as to avoid the demagnatization risk, there is the need of attending to a higher subdivision of the stator poles.

These particularities of the synchronous motor make the motor driving require some tricks, in particular under the situations wherein a variation, sudden or with time, of the load can occur.

It is the case for example of the heating and/or conditioning systems structured with a closed hydraulic circuit wherein a fluid flows comprising an antifreezing additive, also in considerable percentages; this situation is frequent when the heating system must operate under intense cold conditions for example in northern countries.

In this context there would be the need of periodically verifying the good operation of the system so as to possibly add antifreezing additive in case of necessity or so as to regulate the operative fluid flow rate according to the heating needs which are function of the internal and/or external temperature.

Document US 2002/0192085 discloses a fluid circulation system having a primary hydraulic circuit and a secondary hydraulic circuit, wherein a circulation pump transports an operative fluid and a dosed amount of additive. However, said pump is not driven by a synchronous electric motor comprising a control electronic device. A dosage pump for supplying additives (metered amounts of a fluid), and having a synchronous electric motor is known from US 4,702,674.

The technical problem underlying the present invention is that of devising a fluid circulation pump to be installed on a heating and/or conditioning system, having such structural and functional characteristics as to allow to provide information on the status of the system detecting for example the percentage of additive in the operative fluid of the system and thus allowing to regulate the operative conditions of the heating and/or conditioning system.

<u>Summary of the invention</u>

This problem is solved, according to the present invention, by a fluid circulation pump of the previously indicated type and characterised in that it comprises a signal output from said control electronic circuit in order to provide a value correlated with the percentage of additive in the operative fluid of the system.

The invention also relates to a method for measuring a parameter that is characteristic of the heating system, as defined in claim 4.

Further characteristics and the advantages of the circulation pump and of the measuring method according to the present invention will be apparent from the following description of an embodiment thereof, made with reference to the annexed drawings, given for indicative and non-limiting purpose.

Brief description of the drawings

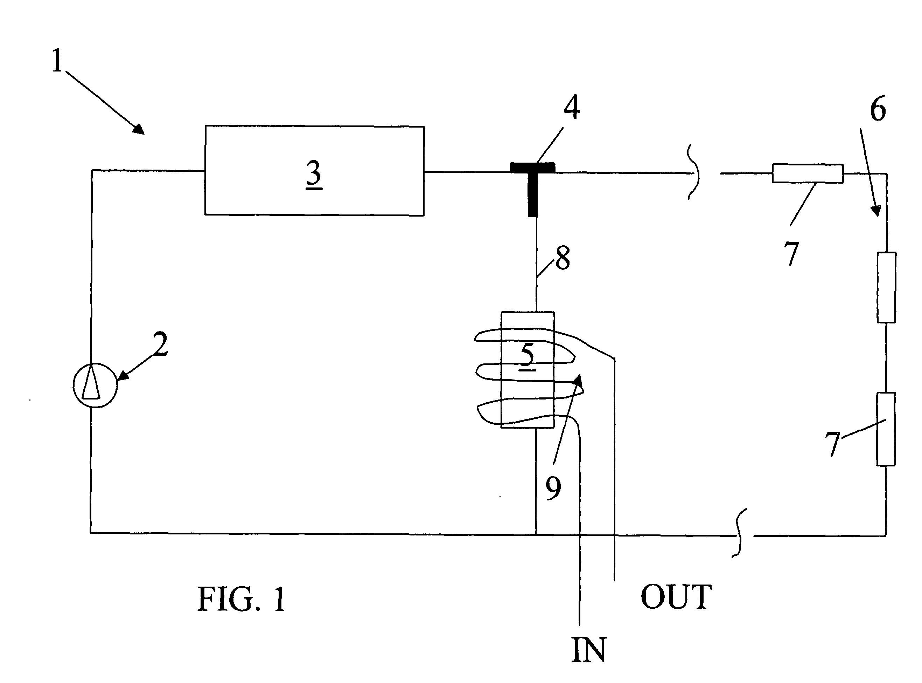

Figure 1 schematically shows a heating system equipped with a circulation pump realised according to the invention;

Figure 2 schematically shows a synchronous electric motor for operating the pump of figure 1, equipped, according to the invention, with means for determining the percentage of additive in the operative fluid of the system;

Figure 3 shows a block chart of a control electronic device of the pump operation;

Figure 4 schematically shows the pump according to the invention together with the control electronic device.

Detailed description of a preferred embodiment

With reference to the figures, 1 globally and schematically shows a heating and/or conditioning system equipped with a circulation pump 2 of the operative fluid, realised according to the present invention.

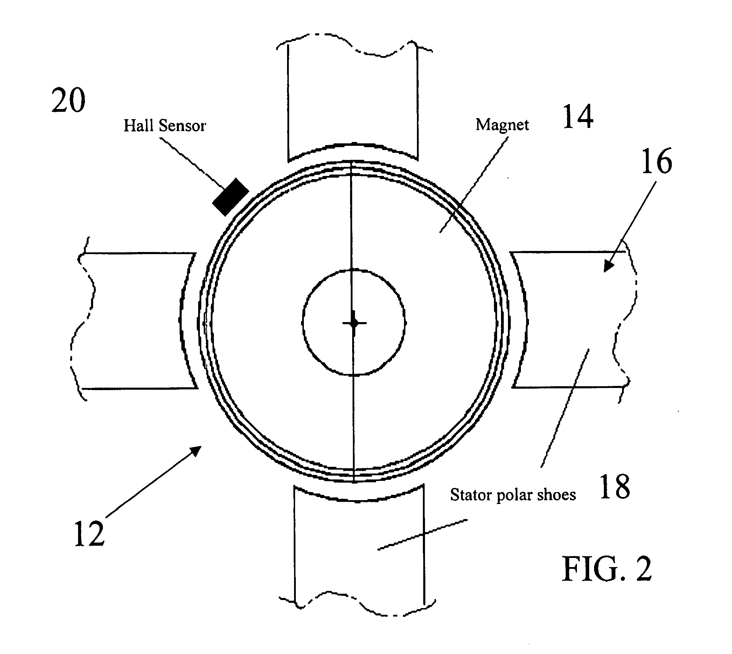

Advantageously, pump 2 is of the synchronous type, i.e. it is rotation-operated by a synchronous electric motor 12 comprising a permanent-magnets rotor 14. The internal structure of the synchronous motor 12 for operating the pump is shown in figure 2 and it will be hereafter described.

The heating system 1 comprises a closed hydraulic circuit 6, which will be hereafter defined as primary, equipped with a plurality of heating elements 7.

The hydraulic circuit 6 is provided with, in series: the synchronous circulation pump 2, a primary heat exchanger 3, i.e. a boiler, and the heating elements 7.

Parallelly to the circuit section where the heating elements 7 are provided, a secondary heat exchanger 5 is provided which supplies heat to a sanitary circuit 9, for example a circuit distributing hot water for domestic use. The heat exchanger 5 is part of a secondary closed hydraulic circuit 8.

On a junction node between the primary hydraulic circuit 6 and the secondary hydraulic circuit 8, wherefrom the pipeline sections branch off parallelly to the circuit section where the heating elements 7 are provided, a motorised three-way valve 4 is provided.

Advantageously, according to the invention, it is possible to determine the percentage of antifreezing additive on the basis of fluodynamic parameters derived through the pump 2.

In other words, the synchronous pump 2 allows to provide electric signals correlated with the percentage of additive in the system.

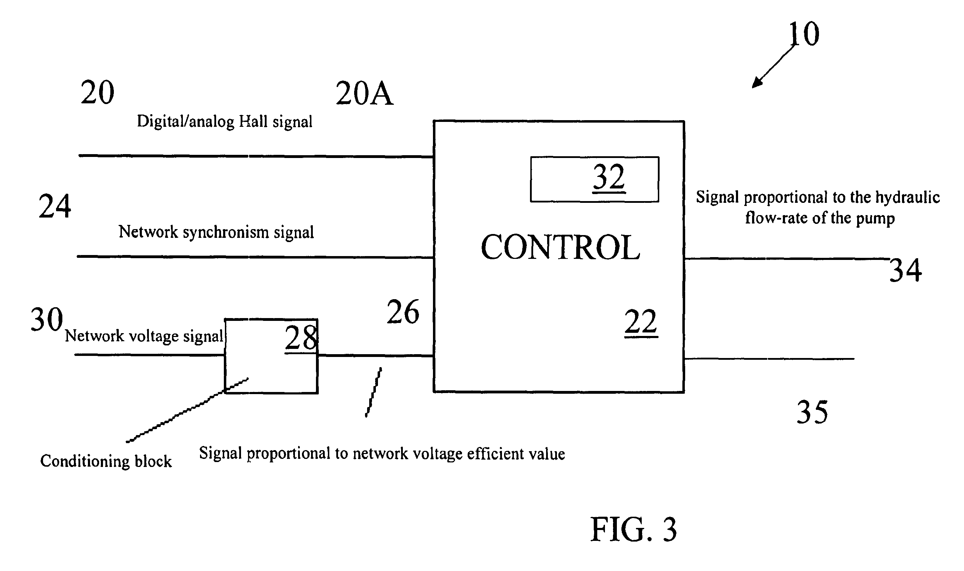

More particularly, with specific reference to the example of figure 3, a control electronic device is shown, realised according to the present invention and globally indicated with 10, for determining the percentage of antifreezing additive in the operative fluid of the system 1.

The device 10 is also able to determine the flow rate of the pump 2 operated by a synchronous electric motor 12. The motor 12, shown in figure 3, is of the type comprising a rotor 14, equipped with a permanent magnet, which is rotation-induced by the electromagnetic field generated by a stator 16, equipped with pole shoes 18 with relevant windings.

The device 10 comprises a magnetic flux sensor 20 of the rotor 14, for example a sensor of the Hall type, arranged on the stator 16 close to the rotor 14. The sensor 20 is connected to a processing unit 22, for example a controller or a CPU, outputting the value of the pump flow rate.

According to the present invention, in order to determine the flow rate Q in a pump operated by the synchronous electric motor 12 the processing unit 22 of the device 10 is used whereto a memory portion is associated wherein experimental data are stored of correlation between the flow rate values and the corresponding values of an operation variable of the pump motor, for example the load angle.

In practice, according to the invention, it is possible to determine the flow rate Q of the liquid flow circulating in the pump 2 operated by the synchronous motor 12 during the operation thereof in steady condition, by employing a measure of an operation variable of the pump, in particular the measure of the load angle or delay $\vartheta$.

EP 1 564 408 B1

As it is well known, this load angle $\vartheta$ represents the phase shift between the voltage applied at the ends of the motor 12 and the counter electromotive force caused by the sum of the effects of the stator 16 flux and of the flux induced by the rotation of the permanent magnet of the motor 14.

When the load applied to the axis of the pump connected with the motor 12 undergoes a variation, also the resistant torque applied to the rotor 14 of the motor 12 undergoes a variation, thus modifying the shift angle between the counter electromotive force and the network voltage, which is exactly the load angle $\vartheta$.

The increase of the load angle is correlated, in a proportional way, with an enhancement of the flow rate Q inside the pump, with a correlation that is linear at intervals. For example, upon linearization, an increase of the flow rate implies a proportional increase of the load angle; vice versa, a decrease of the flow rate corresponds to a decrease of the load angle.

According to the invention, a correlation between the flow rate values and the corresponding load angle values is predetermined: this correlation can be determined through experimental tests or also through theoretical simulations or simulations at the computer, preferably in the course of a calibration step preferably made where the pump is manufactured.

More in detail, as it is well shown in figure 3, the processing unit 22, besides being connected with the sensor 20, receives at its input also a network synchronism signal 24 and a signal proportional to the effective value of the network voltage 26.

With a digital sensor 20 of Hall type, the passage of the peak of magnetic flux of rotor 14 is measured. Knowing that this latter is 90° late on the counter electromotive force, the load angle $\vartheta$ is precisely determined as phase shift between the voltage applied at the ends of the motor 12, which is known thanks to the network synchronism signal 24, and the counter electromotive force caused by the sum of the effects of the stator 16 flux and of the flux induced by the permanent magnet rotation of the rotor 14.

The phase shift $\vartheta$ is thus determined by the processing unit 22 taking the network synchronism signal 24 as reference, which is a square wave signal, with rising and falling edges coinciding with the passage through zero of the network voltage.

It is worth noting that the digital sensor 20 of the Hall type outputs a square wave signal, with rising and falling edges coinciding with the polarity inversion of the permanent magnet of the rotor 14 during rotation.

The time passing between the edge of the synchronism signal 24 and the edge of the sensor 20 signal, which signals the position of the rotor 14, is proportional to the load angle $\vartheta$.

However, this time varies according to the flow rate, to the supply voltage of the motor 12 and to the operating temperature of the rotor 14 magnet.

It is good to precise here that the dependence of the load angle $\vartheta$ on the flow rate is linked to the electrophysical characteristics of the pump. Disregarding the constructive aspects (such as hydraulics, stator windings and mechanical parts), which, in a well-established product, affect the load angle $\vartheta$ mainly because of the manufacture tolerances and however with small and relatively constant values, the other critical parameters acting directly on the variation of the load angle are exactly the network voltage and the temperature of the rotor 14 magnet. In the case of pumps with synchronous motor 12 and rotor 14 immersed in an operative fluid, the temperature of the magnet corresponds to that of this operative fluid.

If the network voltage decreases also the intensity of the magnetic flux produced by stator 16 decreases with a subsequent underexcitation of the motor 12.

This underexcitation makes it more difficult the upkeep of the synchronism situation in the motor 12 and it is interpreted as an increase of the work load, turning out directly with an increase of the load angle.

Vice versa, an increase of the network voltage implies an overexcitation of the motor 12 and thus a decrease of the load angle.

Thus, the hydraulic flow rate Q of the circulating operative fluid is obtained starting from the operation conditions of the synchronous electric motor for operating the pump 2.

Also the temperature of the operative fluid can be determined by the operation conditions of the synchronous electric motor for operating the pump 2.

The dependence on the temperature of the operative fluid is due to the fact that the ferromagnetic material the rotor 14 is made of has a residual magnetic induction $B_R$ which varies according to the temperature.

An enhancement of the operation temperature of the rotor 14 magnet makes the residual magnetic induction $B_R$ decrease, which affects in turn the intensity of the concatenated flux, decreasing it and leading the motor 12 to a situation similar to the case of the supply voltage decrease.

Thus, as far as the load angle is concerned, an increase of the temperature will cause an increase thereof and vice versa.

In order to distinguish if the variation of the load angle $\vartheta$ is due to the supply voltage or if this variation is due to a change of flow rate of the pump, the signal proportional to the effective value of the network voltage 26 is used.

This signal 26 is obtained for example by means of a conditioning block 28, such as a voltage adapting hardware

4

circuit, from a network voltage signal 30. This signal 26 allows the processing unit 22 to go back to the effective value of the supply. In this way, the processing unit 22 is able to provide a signal proportional to the hydraulic flow rate completely independent from the supply voltage.

Instead, in order to distinguish if the variation of the load angle $\vartheta$ is due to the thermal drift or if this variation is due to a change of the flow rate of the pump, an analog sensor 20A of Hall type must be used.

The Hall sensor 20A of the analog type, besides allowing the reading of the polarity inversion of the rotor 14 magnet, is able to output a sinusoidal signal having width proportional to the residual induction $B_R$ of the ferromagnetic material the rotor 14 is made of.

Since the residual induction $B_R$ of the permanent magnet of the rotor is tightly dependent on the operation temperature, by means of the sinusoidal signal produced by the analog sensor 20A the processing unit 22 is able to further distinguish the variation of the load angle due to a flow rate change from the variation of the load angle due to a change of temperature.

In substance, an output signal 34 correlated with the flow rate Q is generated proportionally to the value of a meter 32 of the load angle $\vartheta$, incorporated in the unit 22 and thus proportionally to the hydraulic flow rate, basing the processing on a table pre-established by experimentally detected values.

In substance, by means of the processing unit 22 of the device 10 it is possible to carry out the following acquisitions and processing of electrical signals:

- acquisition of current values of load angle $\vartheta$, of network voltage and of temperature of the rotor 14 magnet;

- comparison between the current value of said load angle and values stored in a predetermined table of correlation with flow rate values;

- possible correction of the flow rate values according to the values of the network voltage and/or temperature of the magnet of the rotor and determination of a current flow rate value.

Advantageously, according to the present invention, it is possible to determine also the percentage of additive in the operative fluid circulating in the system 1. This percentage is obtained indirectly starting from the instantaneous operation conditions of the synchronous electric motor 12 for operating the pump 2.

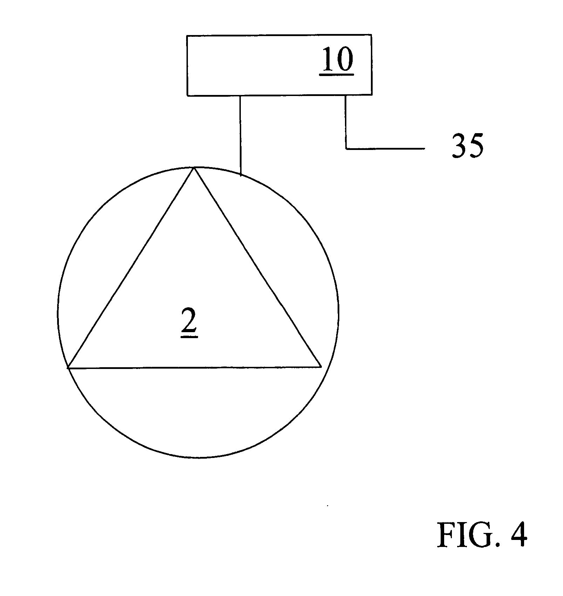

The processing unit 22 can thus provide a further signal output 35, for example as shown in figure 4, in order to provide a value correlated with the percentage of additive of the operative fluid.

As previously said, the percentage of additive is a particularly meaningful datum since the antifreezing additive is normally introduced in considerable percentages, for example up to 40%.

More in particular, the efficiency of the system depends both on the exchangers 3 and 5 of the primary 6 and secondary 9 circuit and on the antifreezing additive percentage. In fact, the addition of antifreezing additive can increase the viscosity of the operative fluid up to 20% and this obviously affects the energetic performance of the system.

This also means that, to a known percentage of additive, a predetermined energetic efficiency of the system 1 also corresponds. As a consequence, knowing the percentage of additive would allow to further obtain, as well as indirectly, information on the efficiency status of the system 1.

For example, for the ethylene glycol additive the following table is valid, which links the specific heat of the fluid at the operating temperature T for different percentages of additive:

Percentage volume of ethylene glycol

| Temp. F° | | | | | |
|---|---|---|---|---|---|
| | 0% | 10% | 20% | 30% | 40% |
| 40 | 1,004 | 0,943 | 0,903 | 0,861 | 0,812 |
| 60 | 1 | 0,947 | 0,909 | 0,868 | 0,825 |
| 80 | 0,998 | 0,952 | 0,915 | 0,876 | 0,834 |

The viscosity of the circulating operative fluid affects the absorption of electric power of the synchronous motor according to a known relation which depends on the fluodynamic characteristics of the pump 2. For example it is possible to use the following formula:

$$m \cdot \xi \, (l/d) \cdot (\omega^2/2) = P$$

where: m is the mass flow rate

$\xi$ is the friction coefficient

1 is the equivalent length of the hydraulic circuit

d is the equivalent diameter of the hydraulic circuit

$\omega$ is the speed of the operating motor of the circulator

P is the absorbed power.

The friction coefficient $\xi$ depends on the Reynolds number (Re) and it is experimentally obtained from the hydraulic circuit. The number of Re depends in turn on the fluid viscosity $\mu$ according to the relation:

$$Re = l \cdot d \cdot \omega/\mu$$

Moreover, the circulating operative fluid viscosity $\mu$ affects the thermal exchange coefficients and thus, definitively, the calorific power of the exchangers. The variation of this value, with respect to a starting known condition, thus provides the indication on the viscosity of the fluid.
In order to determine the value of the calorific power of the system 1 under a starting reference condition, a starting measure can be used carried out with closed delivery immediately downstream the pump 2.
Subsequently it is possible to carry out a further measure by making the operative fluid circulate only on the secondary heat exchanger 5 of the sanitary circuit 9.
To this purpose, the motorised three-way valve 4 can be controlled so as to supply the sole secondary heat exchanger 5, so that the pump 2 only works for supplying the circuit 9.
The calorific power of the secondary exchanger 5 depends on the fluodynamic characteristics of the exchanger itself and on the fluid viscosity: for example the following formula can be used:

$$q = \alpha \, A \, \Delta t$$

where: $\alpha$ is the convection thermal exchange coefficient out

A is the equivalent surface of heat exchange

$\Delta t$ is the thermal drop between the input and the output of the exchanger.

As it is known, the coefficient $\alpha$ depends on the Nusselt number (Nu) according to the relation:

$$\alpha = (Nu \; \lambda)/d$$

where: $\lambda$ is the thermal conductivity

d is the equivalent hydraulic diameter.

Moreover:

$$Nu = C \cdot Re^m \cdot Pr^n$$

where C, m and n are experimental coefficients and

Re = Reynolds number and Pr = Prandtl number

which depend on the operative fluid characteristics such as: viscosity, specific heat and thermal conductivity.

Knowing the type of additive used, the fluid viscosity and the temperature T are obtainable from experimental tables linking the power absorbed by the pump under known operative circuit conditions, i.e. with closed delivery pump or, for example, with circulation limited to the sole secondary circuit of the exchanger 5.

The method according to the invention could be also actuated by means of a pump operated by an asynchronous motor equipped with sensors to detect the flow rate Q of the operative fluid. Also in this case it would be however possible, from the flow rate value, to obtain a signal correlated with the percentage of additive by means of a first measure with closed delivery and a subsequent measure on the secondary hydraulic circuit.

In substance, the method according to the invention allows to provide this indication on the percentage of additive by exploiting the only presence of the pump in the system 1. Obviously, the use of a synchronous pump has the further advantage of allowing to carry out the measure in sensorless way.

The main advantage attained by the fluid circulation pump according to the present invention stays in the concrete possibility of providing a signal output correlated with the value of the percentage of additive in the operative fluid of the system.

Alternatively, the value output from the control circuit of the pump, allows to obtain indications on the efficiency status of the system 1 if the other fluodynamic parameters such as flow rate, operation temperature and percentage of additive are known.

Obviously, a skilled person in the field, in order to meet specific and contingent needs, will be allowed to apply several modifications to the above described fluid circulation pump, all within the scope of protection of the present invention as defined in the following claims.

**Claims**

1. Fluid circulation pump (2), in particular for a heating and/or conditioning system (1) equipped with a primary hydraulic circuit (6) and with a secondary hydraulic circuit (9), wherein the pump (2) circulates an operative fluid, and is operated by a synchronous electric motor (12) and driven by a control electronic device (10), **characterised in that** said device (10) comprises a processing unit (22) receiving at its input a first signal (24) coming from a magnetic flux sensor (20) of a rotor (14) of said motor (12) and a second network synchronism signal (24) and being equipped with or associated to a memory portion wherein experimental data are stored of correlation between the hydraulic flow rate (Q) values and an operation variable of the pump's motor (12); so as to produce a signal output correlated with the percentage of an additive of the circulating operative fluid.

2. Pump according to claim 1, **characterised in that** said variable is the load angle $\vartheta$ and that said sensor (20) is a digital Hall sensor.

3. Pump according to claim 1, **characterised in that** said variable is the load angle $\vartheta$ and that said sensor (20A) is an analog Hall sensor.

4. Method for measuring a parameter characteristic of a heating and/or conditioning system (1) equipped with a primary hydraulic circuit (6) and with a secondary hydraulic circuit (9) and wherein at least one operative fluid circulation pump (2) operated by an electric motor (12) and driven by a control electronic device (10) is provided, **characterised in that** it provides:

   a starting measure of the flow rate of the circulating operative fluid carried out with closed delivery, immediately downstream the pump (2);
   a subsequent measure of the flow rate of the circulating operative fluid in the sole secondary hydraulic circuit (9); said starting and subsequent measure being carried out with means associated to the control device (10) of the pump (2) so as to output an electric signal correlated with the percentage of an additive of the circulating operative fluid or with a variation of the calorific power of the system.

5. Method according to claim 4, **characterised in that** the pump (2) is operated by a synchronous electric motor (12) with a permanent magnet rotor (14) and **in that** said first and second measure are carried out through the following steps of:

  acquisition of at least one operation variable of the pump;
  comparison between the value of said variable and a predetermined table of correlation with hydraulic flow rate values and determination of a corresponding flow rate value.

6. Method according to claim 5, **characterised in that** said at least one operation variable of the pump is a load angle or delay $\vartheta$, i.e. a phase shift angle between the network voltage applied at the ends of the motor (12) and counter electromotive force caused by the sum of the effects of the stator flux and of the flux induced by the rotation of the rotor (14) permanent magnet.

7. Method according to claim 6, **characterised in that** it provides the acquisition of a further operation variable of the pump such as the temperature of the rotor magnet.

8. Method according to claim 7, **characterised in that** it provides the detection of a signal proportional to the residual induction ($B_R$) of the ferromagnetic material of the rotor (14) and dependent on the operation temperature, by means of a Hall sensor (20A) of the analog type.

9. Method according to claim 5, **characterised in that** said at least one operation variable of the pump is a load angle, or delay $\vartheta$, detected by means of a digital Hall sensor (20).

10. Method according to claim 5, **characterised in that** said at least one operation variable of the pump is a load angle, or delay $\vartheta$, detected by means of an analog Hall sensor (20A).

11. Heating and/or conditioning system equipped with a primary hydraulic circuit (6) and with a secondary hydraulic circuit (9) and **characterised in that** it comprises at least one fluid circulation pump according to claim 1.

**Patentansprüche**

1. Fluidzirkulationspumpe (2), insbesondere für ein Heizungs- und/oder Klimatisierungssystem (1), das mit einem primären Hydraulikkreislauf (6) und einem sekundären Hydraulikkreislauf (9) ausgestattet ist, wobei die Pumpe (2) ein Betriebsfluid zirkulieren lässt und von einem Synchronelektromotor (12) betrieben und von einem elektronischen Steuerbaustein (10) angesteuert wird, **dadurch gekennzeichnet, dass** der Baustein (10) eine Verarbeitungseinheit (22) umfasst, die an ihrem Eingang ein erstes Signal (24) empfängt, das von einem Magnetflusssensor (20) eines Rotors (14) des Motors (12) stammt, und ein zweites Signal in Form eines Netzsynchronsignals (24), und mit einem Speicherabschnitt ausgestattet oder einem Speicherabschnitt zugeordnet ist, in dem experimentell bestimmte Daten bezüglich der Korrelation zwischen den Werten des hydraulischen Durchsatzes (Q) und einer Betriebsvariable des Pumpenmotors (12) abgelegt sind; um einen Signalausgang zu erzeugen, der mit dem prozentualen Anteil eines Additivs des zirkulierenden Betriebsfluids korreliert.

2. Pumpe nach Anspruch 1, **dadurch gekennzeichnet, dass** die Variable der Lastwinkel $\vartheta$ und der Sensor (20) ein digitaler Hall-Sensor ist.

3. Pumpe nach Anspruch 1, **dadurch gekennzeichnet, dass** die Variable der Lastwinkel $\vartheta$ und der Sensor (20A) ein analoger Hall-Sensor ist.

4. Verfahren zum Messen einer Parameterkennlinie eines Heizungs- und/oder Klimatisierungssystems (1), das mit einem primären Hydraulikkreislauf (6) und einem sekundären Hydraulikkreislauf (9) ausgestattet ist, wobei zumindest eine Zirkulationspumpe (2) für ein Betriebsfluid vorgesehen ist, die von einem Elektromotor (12) betrieben und von einem elektronischen Steuerbaustein (10) angesteuert wird, **dadurch gekennzeichnet, dass** es vorsieht:

  eine Startmessung des Durchsatzes des zirkulierenden Betriebsfluids, die mit geschlossener Zufuhr unmittelbar stromabwärts der Pumpe (2) ausgeführt wird;
  eine darauf folgende Messung des Durchsatzes des zirkulierenden Betriebsfluids in dem einzigen sekundären Hydraulikkreislauf (9);

wobei die Startmessung und darauf folgende Messung mit Mitteln ausgeführt werden, die dem Steuerbaustein (10) der Pumpe (2) zugeordnet sind, um ein elektrisches Signal auszugeben, das mit dem prozentualen Anteil eines Additivs des zirkulierenden Betriebsfluids oder mit einer Schwankung der kalorischen Leistung des Systems korreliert.

5. Verfahren nach Anspruch 4, **dadurch gekennzeichnet, dass** die Pumpe (2) von einem Synchronelektromotor (12) mit einem Permanentmagnetrotor (14) betrieben wird und die erste und zweite Messung über folgende Schritte ausgeführt werden:

Beschaffung wenigstens einer Betriebsvariable der Pumpe;
Vergleichen des Werts der Variable mit einer vorbestimmten Korrelationstabelle mit Werten des hydraulischen Durchsatzes, und Bestimmen eines entsprechenden Durchsatzwerts.

6. Verfahren nach Anspruch 5, **dadurch gekennzeichnet, dass** die wenigstens eine Betriebsvariable der Pumpe ein Lastwinkel oder Nachlauf $\vartheta$ ist, d.h. ein Phasenverschiebungswinkel zwischen der an den Anschlüssen des Motors (12) anliegenden Netzspannung und einer gegenelektromotorischen Kraft, die durch die Summe der Auswirkungen des Statorflusses und des durch die Rotation des Permanentmagneten des Rotors (14) induzierten Flusses bewirkt wird.

7. Verfahren nach Anspruch 6, **dadurch gekennzeichnet, dass** es darüber hinaus die Beschaffung einer weiteren Betriebsvariable der Pumpe wie z.B. der Temperatur des Rotormagneten vorsieht.

8. Verfahren nach Anspruch 7, **dadurch gekennzeichnet, dass** es mittels eines Hall-Sensors (20A) analoger Bauart die Erfassung eines Signals vorsieht, das zur Restinduktion ($B_R$) des ferromagnetischen Materials des Rotors (14) proportional ist und von der Betriebstemperatur abhängt.

9. Verfahren nach Anspruch 5, **dadurch gekennzeichnet, dass** die zumindest eine Betriebsvariable der Pumpe ein Lastwinkel oder Nachlauf $\vartheta$ ist, der mittels eines digitalen Hall-Sensors (20) erfasst wird.

10. Verfahren nach Anspruch 5, **dadurch gekennzeichnet, dass** die zumindest eine Betriebsvariable der Pumpe ein Lastwinkel oder Nachlauf $\vartheta$ ist, der mittels eines analogen Hall-Sensors (20A) erfasst wird.

11. Heizungs- und/oder Klimatisierungssystem, das mit einem primären Hydraulikkreislauf (6) und einem sekundären Hydraulikkreislauf (9) ausgestattet und **dadurch gekennzeichnet ist, dass** es zumindest eine Fluidzirkulationspumpe nach Anspruch 1 umfasst.

**Revendications**

1. Pompe de circulation de fluide (2), en particulier pour un système de chauffage et/ou de climatisation (1) équipé d'un circuit hydraulique primaire (6) et d'un circuit hydraulique secondaire (9), dans laquelle la pompe (2) fait circuler un fluide de fonctionnement et est entraînée par un moteur électrique synchrone (12) et pilotée par un dispositif électronique de commande (10), **caractérisée en ce que** ledit dispositif (10) comprend une unité de traitement (22) recevant au niveau de son entrée un premier signal (24) provenant d'un capteur de flux magnétique (20) d'un rotor (14) dudit moteur (12) et un second signal de synchronisme de réseau (24) et étant équipée de, ou associée à, une partie de mémoire dans laquelle des données expérimentales sont stockées de corrélation entre les valeurs de débit hydraulique (Q) et une variable de fonctionnement du moteur de la pompe (12) ; de manière à produire une sortie de signal corrélée au pourcentage d'un additif du fluide de fonctionnement en circulation.

2. Pompe selon la revendication 1, **caractérisée en ce que** ladite variable est l'angle de charge $\vartheta$ et **en ce que** ledit capteur (20) est un capteur Hall numérique.

3. Pompe selon la revendication 1, **caractérisée en ce que** ladite variable est l'angle de charge $\vartheta$ et **en ce que** ledit capteur (20A) est un capteur Hall analogique.

4. Procédé destiné à mesurer une caractéristique de paramètre d'un système de chauffage et/ou de climatisation (1) équipé d'un circuit hydraulique primaire (6) et d'un circuit hydraulique secondaire (9) et dans lequel au moins une pompe de circulation de fluide de fonctionnement (2) entraînée par un moteur électrique (12) et pilotée par un dispositif électronique de commande (10) est prévue, **caractérisé en ce qu'**il est prévu :

une mesure de départ du débit du fluide de fonctionnement de circulation effectuée avec un refoulement fermé, immédiatement en aval de la pompe (2) ;

une mesure ultérieure du débit du fluide de fonctionnement en circulation dans le seul circuit hydraulique secondaire (9) ;

ladite mesure de départ et ladite mesure ultérieure étant effectuées avec des moyens associés au dispositif de commande (10) de la pompe (2) de manière à fournir en sortie un signal électrique corrélé au pourcentage d'un additif du fluide de fonctionnement en circulation ou à une variation de la puissance calorifique du système.

5. Procédé selon la revendication 4, **caractérisé en ce que** la pompe (2) est entraînée par un moteur électrique synchrone (12) muni d'un rotor à aimant permanent (14) et **en ce que** lesdites première et seconde mesures sont effectuées au moyen des étapes suivantes consistant à :acquérir au moins une variable de fonctionnement de la pompe ;

faire la comparaison entre la valeur de ladite variable et une table de corrélation prédéterminée de valeurs de débit hydraulique et déterminer une valeur de débit correspondante.

6. Procédé selon la revendication 5, **caractérisé en ce que** ladite au moins une variable de fonctionnement de la pompe est un angle de charge ou retard $\vartheta$, à savoir un angle de déphasage entre la tension du réseau appliquée au niveau des bornes du moteur (12) et la force contre-électromotrice causée par la somme des effets du flux du stator et du flux induit par la rotation de l'aimant permanent du rotor (14).

7. Procédé selon la revendication 6, **caractérisé en ce qu'**il prévoit l'acquisition d'une variable de fonctionnement supplémentaire de la pompe tel que la température de l'aimant du rotor.

8. Procédé selon la revendication 7, **caractérisé en ce qu'**il prévoit la détection d'un signal proportionnel à l'aimantation résiduelle ($B_R$) du matériau ferromagnétique du rotor (14) et dépendant de la température de fonctionnement, au moyen d'un capteur Hall (20A) de type analogique.

9. Procédé selon la revendication 5, **caractérisé en ce que** ladite au moins une variable de fonctionnement de la pompe est un angle de charge, ou retard $\vartheta$, détecté au moyen d'un capteur Hall numérique (20).

10. Procédé selon la revendication 5, **caractérisé en ce que** ladite au moins une variable de fonctionnement de la pompe est un angle de charge, ou retard $\vartheta$, détecté au moyen d'un capteur Hall analogique (20A).

11. Système de chauffage et/ou de climatisation équipé d'un circuit hydraulique primaire (6) et d'un circuit hydraulique secondaire (9) et **caractérisé en ce qu'**il comprend au moins une pompe de circulation de fluide selon la revendication 1.

FIG. 1

EP 1 564 408 B1

**20**

Hall Sensor

Magnet **14**

**16**

**12**

Stator polar shoes **18**

FIG. 2

EP 1 564 408 B1

**20**  **20A**

Digital/analog Hall signal

**24**

Network synchronism signal

**30** Network voltage signal **28**

**26**

Conditioning block  Signal proportional to network voltage efficient value

**32**

CONTROL

**22**

**10**

Signal proportional to the hydraulic
flow-rate of the pump

**34**

**35**

FIG. 3

FIG. 4